# EUROPÄISCHE PATENTSCHRIFT

(11) **EP 1 588 962 B1**
(45) Veröffentlichungstag und Bekanntmachung des Hinweises auf die Patenterteilung: **11.07.2007**
(21) Anmeldenummer: 05007087.9
(22) Anmeldetag: 31.03.2005
(51) Int. Cl.: B65G 49/06, B07C 5/04, B65G 1/04

(54) **Beladevorrichtung zum sortierenden Beladen einer Speichereinrichtung mit plattenförmigem Material**
Loading mechanism for loading sheet-like material in a sorted manner into a storage device
Mécanisme de chargement pour le chargement et le tri combiné d'un dispositif de stockage de matériaux sous forme de plaques

(30) Priorität: 23.04.2004 DE 102004019956
(43) Veröffentlichungstag der Anmeldung: 26.10.2005
(73) Patentinhaber: HEGLA Fahrzeug- u. Maschinenbau GmbH & Co. KG, D-37688 Beverungen (DE)
(72) Erfinder: Vollbracht, Manfred, 37688 Beverungen (DE); Rüschoff, Gerhard, 37671 Höxter (DE); Riepe, Dieter, 37688 Beverungen (DE); Hötger, Bernhard, 37697 Lauenförde (DE)
(74) Vertreter: Solf, Alexander

(56) Entgegenhaltungen:
- EP-A- 0 048 334
- EP-A- 0 620 171
- EP-A- 0 816 265
- EP-A- 1 323 651
- WO-A-95/25688

## Beschreibung

Die Erfindung betrifft eine Vorrichtung aufweisend eine Steuereinheit und eine mit dieser in Verbindung stehende, zur manuellen Beschickung mit plattenförmigem Material, insbesondere mit Glasscheiben, ausgebildete Beladevorrichtung, die eine Speichereinrichtung zum Speichern des plattenförmigen Materials und eine Sortiervorrichtung zum sortierenden Beladen der Speichereinrichtung mit dem plattenförmigen Material, insbesondere mit den Glasscheiben, aufweist.

Die EP 0 048 334 A1 beschreibt eine zur vollautomatischen Beschickung mit plattenförmigem Material, insbesondere mit Glasscheiben, ausgebildete Beladevorrichtung mit einer als Sortiervorrichtung dienenden Übergabevorrichtung und einem als Speichereinrichtung dienendem Fächergestell, wobei die Übergabevorrichtung entlang des Fächergestells seitlich verfahrbar ist. Dazu ist die Übergabevorrichtung mit einem auf Schienen entlang des Fächergestells seitlich verfahrbaren Verschiebewagen gekoppelt und an einer Führungsschiene des Verschiebewagens seitlich verschiebbar lagert. Die Vorrichtung der EP 0 048 334 A1 dient zum im Wesentlichen fortlaufenden sortierenden Beladen der Fächerwagen.

Aus der EP 0 620 171 B1 ist eine weitere Beladevorrichtung zur vollautomatischen Beschickung mit plattenförmigem Material bekannt, die automatisch gesteuert mit einem schienengebundenen auf einer stationären Führungsbahn verfahrbaren Sortierwagen, der zwei bis vier Glasscheiben aufnehmen kann, die aufgenommenen Glasscheiben quer zu einer Speichereinrichtung, die aus in genau.definierter Position längs der Führungsbahn nebeneinander aufgestellten Fächerwagen besteht, verfährt und in ein vorbestimmtes Fach eines Fächerwagens schiebt. Diese Beladevorrichtung benötigt zusätzlich eine separate stationäre Stützwand, von der die einzelnen Scheiben in den Sortierwagen gezogen werden müssen.

Zur ergänzenden, manuellen Beladung der Speicherfächer der Fächerwagen mit Sonderscheiben ist eine weitere stationäre Übergabevorrichtung vorgesehen, die eine Führung und eine länge der Führung manuell verschiebbare und manuell positionierbare Luftkissenwand aufweist. An die,Übergabevorrichtung wird ein Fächerwagen manuell herangeführt. Dann wird die eine Sonderglasscheibe tragende Luftkissenwand manuell vor ein Fach des Fächerwagens gefahren und die Glasscheibe manuell eingeschoben. Dieser Prozess ist sehr zeitaufwendig und nicht frei von Irrtümern bei der persönlichen Auswahl des Fachs des Fächerwagens.

Außerdem kann nur ein einzelner Fächerwagen nachbeladen werden, was eine notwendige Bestückung mehrerer Fächerwagen mit gleichen Sondergläsern erheblich verzögert.

Insgesamt erfordert diese Vorrichtung einen erheblichen Raumbedarf und extrem lange Beladezeiten.

Aufgabe der Erfindung ist, eine einfach aufgebaute Vorrichtung zu schaffen, die das manuelle Einsortieren von Plattenmaterial in einen vertikalen oder unter einem bestimmten Winkel zur vertikalen geneigten Speicher erleichtert und bei der mit einfachen Mitteln Irrtümer und Beschädigungen des plattenförmigen Materials beim Einsortieren ausgeschlossen werden können.

Diese Aufgaben werden durch die Merkmale des Anspruchs 1 gelöst. Vorteilhafte Weiterbildungen der Erfindung werden in den Unteransprüchen gekennzeichnet.

Anhand der Zeichnung wird die Erfindung im Folgenden schematisch und beispielhaft näher erläutert. Es zeigen:
Fig. 1 eine Seitenansicht der erfindungsgemäßen Vorrichtung mit einer zum Einschieben bereiten Glasscheibe;
Fig. 2 eine Seitenansicht der Vorrichtung mit teilweise eingeschobener Glasscheibe;
Fig. 3 eine Seitenansicht der Vorrichtung mit eingeschobener Glasscheibe;
Fig. 4 eine Draufsicht auf eine erste Ausführungsform der Vorrichtung, in der Fächerwagen positioniert sind;
Fig. 5 eine weitere Ausführungsform der Vorrichtung mit einer stationären Speichereinrichtung.

Die Beladevorrichtung der erfindungsgemäßen Vorrichtung weist im Wesentlichen eine Speichereinrichtung 5 und eine Sortiervorrichtung 7 auf.

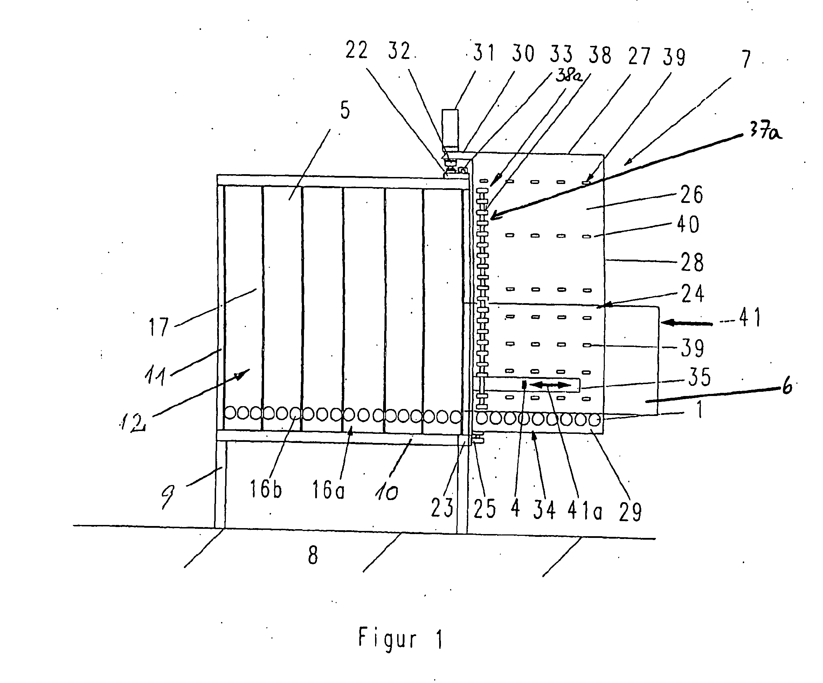

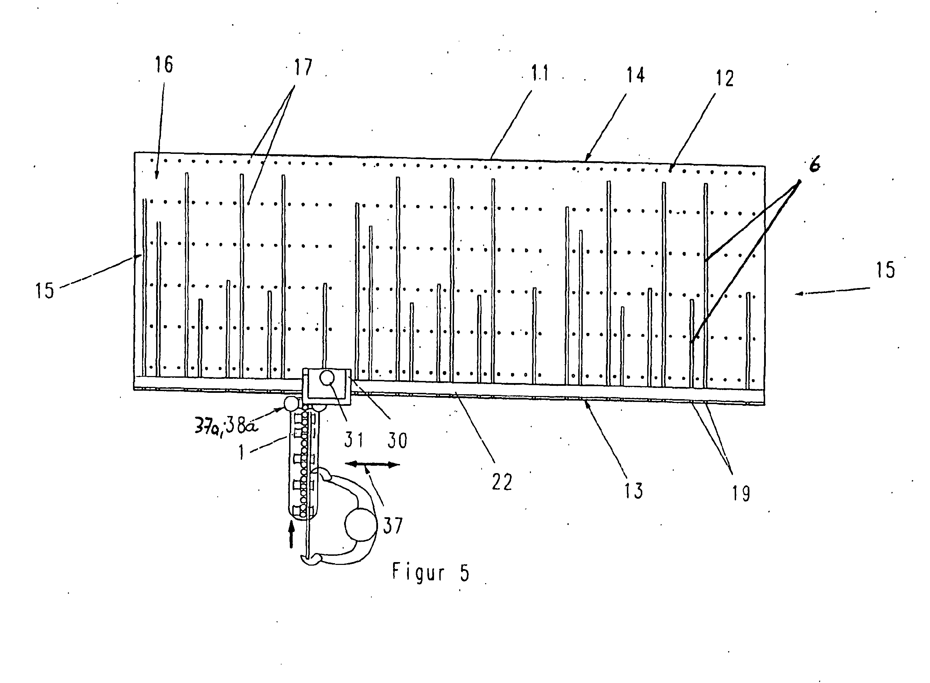

Die Speichereinrichtung 5 (Fig. 1, 5) ist im Abstand vom Boden 8 aufgebockt und lagert z. B. auf Füßen 9, auf denen ein horizontal rechteckiges Traggestell 10 ruht. Auf dem Traggestell 10 ist ein Rahmengestell 11 aufgebaut. Das Traggestell 10 und das Rahmengestell 11 umgrenzen einen quaderförmigen Beladeraum 12, mit einer Beladeseite 13, einer Rückseite 14 sowie zwei seitlichen Begrenzungen 15.

Der Beladeraum 12 ist in sich von der Beladeseite 13 zur Rückseite 14 erstreckende, parallel zueinander angeordnete beladeseitig und zweckmäßigerweise auch rückseitig offene Fächer 16 unterteilt, wobei die Unterteilung mit an sich bekannten Fächerbegrenzungselementen z. B. mit hintereinander gereihten z. B. mit Röllchen bestückten in Vertikalebenen angeordneten Stahldrähten 17 ausgebildet ist. Am Boden der Fächer 16 ist jeweils eine Rollenbahn 16a mit sich um senkrecht zur Erstreckung des Fachs 16 angeordneten horizontalen Achsen drehenden Rollen 16b vorgesehen. Anstelle der Rollen 16b können auch andere Förderelemente wie z. B. Transportbänder eingebaut sein.

In die Fächer 16 werden Glasscheiben 6 einsortiert, deren Vorderkanten 19 zweckmäßigerweise seitlich fluchten.

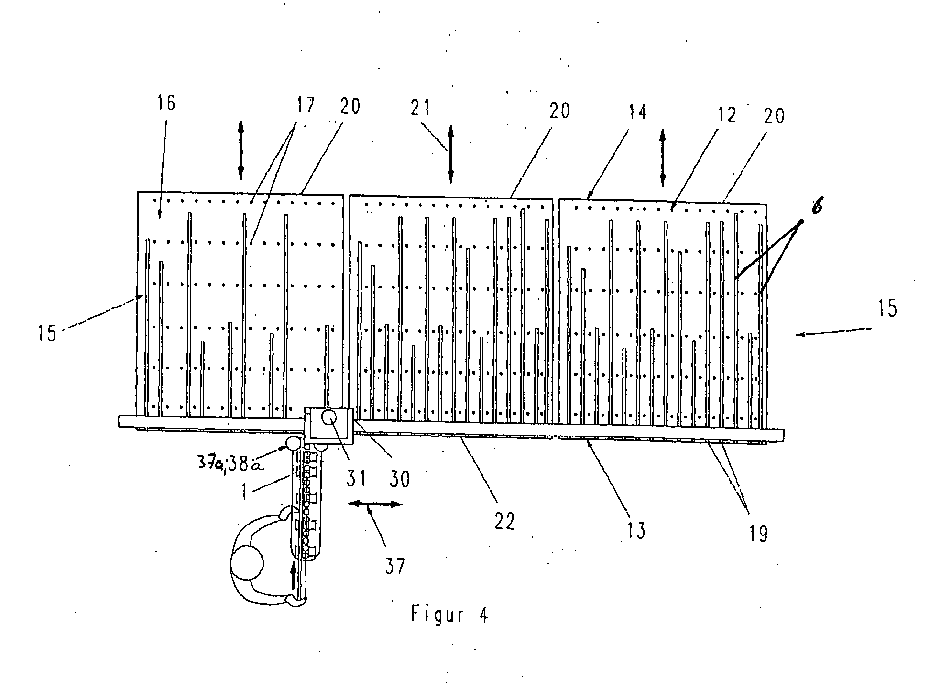

Eine erfindungsgemäße Alternative der Speichereinrichtung 5 (Fig. 4) sieht vor, im Raum 12 der nicht vollständig durch Rahmenteile begrenzt sein muss, mehrere Fächerwagen 20 seitlich nebeneinander gestellt zu positionieren, die in Doppelpfeilrichtung 21 in den Raum 12 eingeschoben und herausgezogen werden können. Die Fächerwagen 20 sind in an sich bekannter Weise ausgestaltet und weisen ebenfalls Fächer 16 und Fächerbegrenzungselemente 17 auf.

Beladeseitig frontal steht die Sortiervorrichtung 7 in Doppelpfeilrichtung 37 seitlich verfahrbar mit der Speichereinrichtung 5 in Verbindung. Sie lagert oberseitig an einem Tragbalken 22 und stützt sich unterseitig, z. B. über mindestens eine Führungsrolle 25 an einem Führungsbalken 23 der Speichereinrichtung 5 ab (Fig. 1).

Die Sortiervorrichtung 7 weist ein vertikal oder etwas geneigt ausgerichtetes, plattenförmiges, senkrecht zur Beladefront ausgerichtetes Anlageelement 24 mit einer ebenen Beladeseite 26, einer Oberkante 27, einer freien Seitenkante 28 und einer Unterkante 29 auf. An der Oberkante 27 ist speichereinrichtungsseitig eine Kragplatte 30 angeordnet, die den Tragbalken 22 der Speichereinrichtung 5 überragt und die einen mit einer Programmsteuerung in Verbindung stehenden Motor 31 trägt. Der Motor treibt Antriebsmittel 32 an, die mit einer Linearführung 33 in Verbindung stehen, die an der Speichereinrichtung 5, z. B. am Traggestell 10 angeordnet ist. Auf diese zweckmäßige Weise ist die Sortiervorrichtung 7 längs der Speichereinrichtung 5 verfahrbar.

Das Anlageelement 24 ist im Bereich oberhalb der Unterkante 29 mit einer der Ebene der Beladeseite 26 vorgeordneten, Tragrollen 1 aufweisenden, horizontalen Rollenbahn 34 bestückt, wobei die Achsen der Rollen 1 senkrecht zur Ebene der Beladeseite 26 angeordnet sind und wobei die Rollenbahn 34 höhenmäßig mit den Rollenbahnen 16a der Speichereinrichtung 5 fluchtet.

Oberhalb der Rollenbahn 34 ist parallel dazu ausgerichtet eine Einschiebeeinrichtung 35 in den Oberflächenbereich der Beladeseite 26 des Anlageelements 24 eingebracht, die einen mit einer steuerbaren Antriebseinrichtung (nicht dargestellt) in Doppelpfeilrichtung 41a in Richtung Speichereinrichtung 5 verfahrbares Schiebeelement, z. B. einen Schiebefinger 4, aufweist, der aus der Ebene der Beladeseite 26 heraus- und wieder zurückfahrbar angeordnet ist.

Frontal vor der Speichereinrichtung 5 ist an der Sortiervorrichtung 7 eine vertikal ausgerichtete Führungseinrichtung 37a für eine Glasscheibe 6 vorgesehen, die z. B. zwei seitlich nebeneinander auf Glasscheibenabstand angeordnete vertikale Führungssäulen 38a, z. B. mit im vertikalen Abstand voneinander angeordneten Führungsrollen 38, die um vertikale Achsen drehen, aufweist. Zweckmäßigerweise sind die Führungsrollen 38 mit einem Antriebsmittel (nicht dargestellt) antreibbar. Zweckmäßigerweise sind im Anlageelement 24 als Abstützelemente für eine Glasscheibe 6, z. B. in horizontalen Reihen 39 aus der Ebene der Beladeseite 26 vorstehende, um vertikale Achsen drehbare Röllchen 40 angeordnet. Ebenso zweckmäßig kann in Verbindung mit den Röllchen 40 oder anstelle der Röllchen 40 eine an sich bekannte Einrichtung vorgesehen sein, die ein Luftkissen auf der Beladeseite 26 aufbaut und/oder einen Unterdruck erzeugt.

Nach einer besonderen Ausführungsform der Erfindung ist die Sortiervorrichtung 7 doppelseitig verwendbar ausgeführt (Fig. 4, 5). Dementsprechend befinden sich Rollenbahnen 34 und Abstützelemente, z. B. drehbare Röllchen 40 in horizontalen Reihen 39 beidseits des Anlageelements 24, so dass Glasscheiben sowohl von der einen als auch von der anderen Seite auf Rollenbahnen 34 gestellt werden können. Diese Ausführungsform hat den Vorteil, dass beschichtete Scheiben nicht gewendet zu werden brauchen. Sie können zur Pärchenbildung mit einer unbeschichteten Scheibe in ein benachbartes Fach so eingeschoben werden, dass zur Pärchenbildung keinerlei Wendevorgänge erforderlich sind.

Die erfindungsgemäße Vorrichtung arbeitet wie folgt.

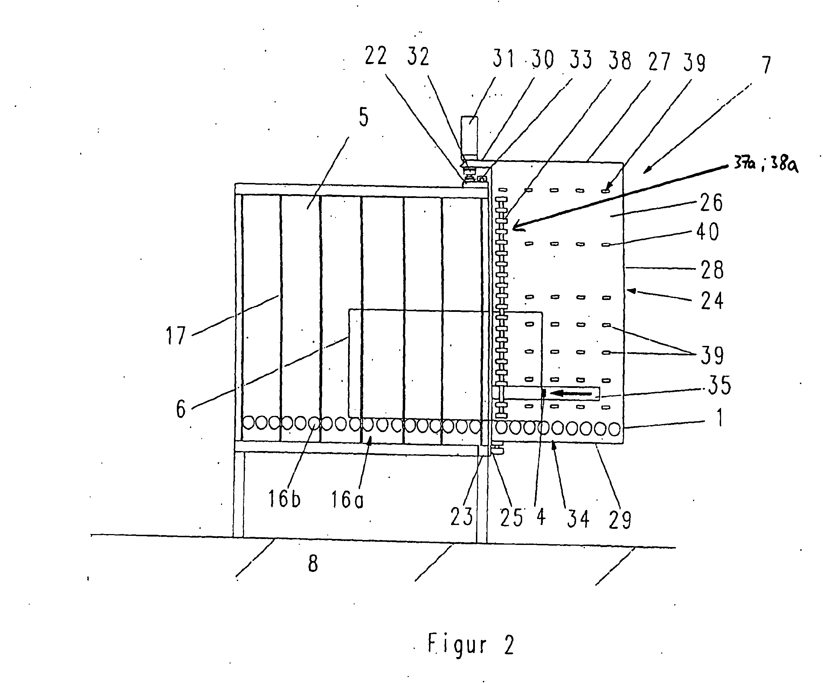

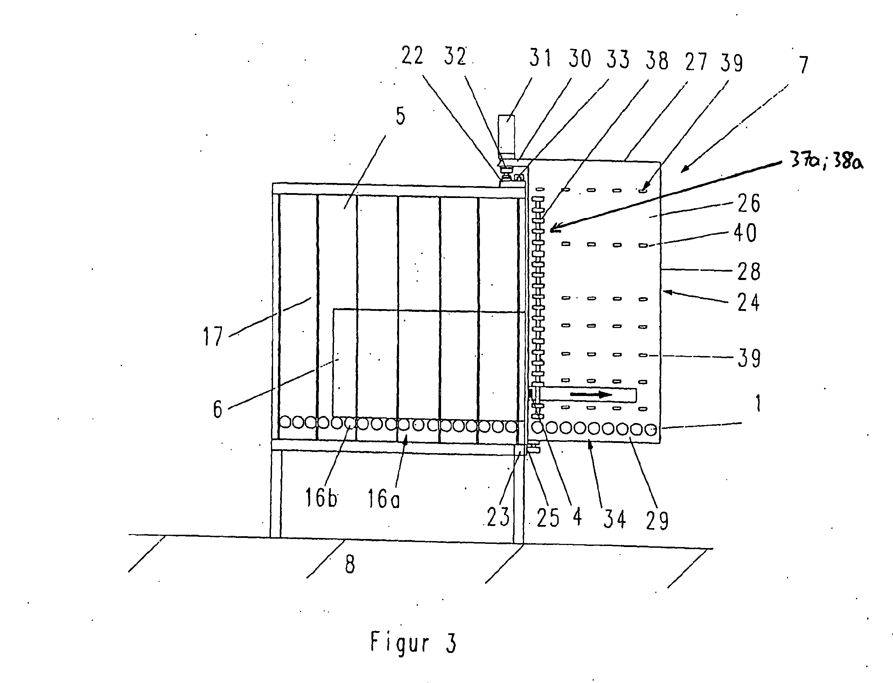

Auf die Rollenbahn 34 wird eine Glasscheibe 6 gestellt. Die Sortiervorrichtung 7 verfährt programmgesteuert vor ein vorbestimmtes Fach 16. Die Glasscheibe 6 wird von Hand oder - im Falle von z. B. angetriebenen Rollen 1 - automatisch in Pfeilrichtung 41 (Fig. 1) ein Stück in Richtung des vorbestimmten Fachs 16 geschoben. Anschließend fährt der Schiebefinger 4 automatisch gesteuert aus (Fig. 2), hintergreift die Glasscheibe 6 und schiebt sie vollständig auf eine vorbestimmte Position in das Fach 16. Dabei wird die Glasscheibe 6 durch die Führungswalzen 38 geführt und gegebenenfalls zusätzlich angetrieben. Danach fährt der Finger 4, wieder in seine Ausgangsposition zurück (Fig. 3).

Die erfindungsgemäße Vorrichtung erleichtert das Einsortieren von Glasscheiben6 oder Plattenmaterial in einen vertikalen oder unter einem bestimmten Winkel zur vertikalen geneigten Speicher. Die Sortiervorrichtung 7 befindet sich auf der Beladeseite der Speichereinrichtung 5 und ist quer zur Speichereinrichtung 5 verfahrbar. Vorteilhaft ist, dass die erfindungsgemäße Sortiervorrichtung 7 mit einfachen Mitteln an eine bereits bestehende, stationäre Speichereinrichtung 5 montiert werden kann.

Die Beladevorrichtung ist zur manuellen Beschickung ausgebildet. Zur manuellen Beschickung nimmt ein Bediener von einer Förderstrecke eine Glasscheibe 6 ab. Die Sortiervorrichtung 7 hat von der Programmsteuerung einen Impuls bekommen und ist zu einem bestimmten Fach 16 gefahren. Über eine optische Anzeige kann dem Bediener die Lage der Ober- bzw. Unterseite einer Glasscheibe 6 im Speicher angezeigt werden. Der Bediener setzt die Glasscheibe 6 entsprechend auf den Transportrollen 1 ab und lehnt sie gegen das Anlageelement 24. Danach schiebt er die Glasscheibe 6 in die Speichereinrichtung 5. Die vertikale Führungseinrichtung 37a gewährleistet den mittigen Einschub in ein Speicherfach 16. Wenn sich die Glasscheibenhinterkante kurz vor der vertikalen Führungseinrichtung 37 befindet, schwenkt der Einschiebefinger 4 aus der Ebene der Beladeseite 26 heraus und schiebt die Glasscheibe 6 mit der Hinterkante lagegenau in das Speicherfach 16. Der Bediener quittiert den Vorgang der Steuereinrichtung und die Steuerung übermittelt die Position für den nächsten Einschubvorgang. Danach fährt die Sortiervorrichtung 7 auf die nächste, vorgegebene Position.

Wesentlich ist, dass eine programmierbare Steuerungseinheit mit der Beladevorrichtung, insbesondere mit dem Motor 31 und weiteren Schaltelementen der Sortiervorrichtung 7 in Verbindung steht. Des Weiteren sind Positionserkennungseinrichtungen an der Sortiervorrichtung 7 und an der Speichereinrichtung 5 für das Erkennen der Position der Sortiervorrichtung 7 vorgesehen.

Die erfindungsgemäße Sortiervorrichtung 7 weist zweckmäßigerweise ein Dateneingabegerät (nicht dargestellt) auf, das mit der Steuereinrichtung der erfindungsgemäßen Vorrichtung in Verbindung steht. Des Weiteren ist die Sortiervorrichtung 7 zweckmäßigerweise schienengeführt und schienengebunden an der Speichereinrichtung 5 angeordnet, wobei vorteilhaft ist, wenn die Linearführung 33 in die Schienenführung der Speichereinrichtung 5 integriert ist.

## Patentansprüche

1. Vorrichtung aufweisend eine Steuereinheit und eine mit dieser in Verbindung stehende, zur manuellen Beschickung mit aufrecht stehendem, plattenförmigem Material, insbesondere mit Glasscheiben (6), ausgebildete Beladevorrichtung, wobei die Beladevorrichtung eine Speichereinrichtung (5) zum Speichern des aufrecht stehenden, plattenförmigen Materials und eine Sortiervorrichtung (7) zum sortierenden Beladen der Speichereinrichtung (5) mit dem aufrecht stehenden, plattenförmigen Material aufweist, wobei die Sortiervorrichtung (7) programmgesteuert an einer Beladeseite der Speichereinrichtung (5) entlang der Beladeseite seitlich verfahrbar ist und wobei die Sortiervorrichtung (7) beladeseitig und seitlich verfahrbar mit der Speichereinrichtung (5) in Verbindung steht und an der Speichereinrichtung (5) gelagert ist.

2. Vorrichtung nach Anspruch 1,
**dadurch gekennzeichnet, dass**
die Sortiervorrichtung (7) mit einer speichereinrichtungsfesten Linearführung (33) in Verbindung steht.

3. Vorrichtung nach Anspruch 2,
**dadurch gekennzeichnet, dass**
an der Sortiervorrichtung (7) ein programmgesteuerter Motor (31) angeordnet ist, der über Antriebsmittel (32) mit der Linearführung (33) in Verbindung steht.

4. Vorrichtung nach Anspruch 3,
**dadurch gekennzeichnet, dass**
der Motor (31) schaltungstechnisch mit einer programmierten Steuereinrichtung in Verbindung steht.

5. Vorrichtung nach Anspruch 4,
**dadurch gekennzeichnet, dass**
an der Speichereinrichtung (5) und der Sortiervorrichtung (7) korrespondierende Positionserkennungselemente angeordnet sind, die z. B. elektrisch oder funktechnisch mit der Steuereinrichtung in Verbindung stehen.

6. Vorrichtung nach Anspruch 4 und/oder 5,
**dadurch gekennzeichnet, dass**
die Sortiervorrichtung (7) ein Dateneingabegerät aufweist, das mit der Steuereinrichtung in Verbindung steht.

7. Vorrichtung nach einem oder mehreren der Ansprüche 1 bis 6,
**dadurch gekennzeichnet, dass**
die Sortiervorrichtung (7) schienengeführt und schienengebunden an der Speichereinrichtung (5) angeordnet ist.

8. Vorrichtung nach Anspruch 7,
**dadurch gekennzeichnet, dass**
die Linearführung (33) in die Schienenführung integriert ist.

9. Vorrichtung nach einem oder mehreren der Ansprüche 2 bis 8,
**dadurch gekennzeichnet, dass**
die Sortiervorrichtung (7) an der Linearführung (33) und in einem davon höhenmäßig beabstandeten Bereich an der Speichereinrichtung (5) abgestützt ist.

10. Vorrichtung nach einem oder mehreren der Ansprüche 1 bis 9,
**dadurch gekennzeichnet, dass**
die Sortiervorrichtung (7) über Stützrollen (25) an der Speichervorrichtung (5) geführt wird.

11. Vorrichtung nach einem oder mehreren der Ansprüche 1 bis 10,
**dadurch gekennzeichnet, dass**
die Speichereinrichtung (5) im Abstand vom Boden (8) z. B. auf Füßen (9) aufgebockt ist.

12. Vorrichtung nach einem oder mehreren der Ansprüche 1 bis 11,
**dadurch gekennzeichnet, dass**
die Speichereinrichtung (5) ein horizontal angeordnetes, rechteckiges Traggestell (10) und ein Rahmengestell (11) aufweist, das auf dem Traggestell (10) aufgebaut ist, wobei das Traggestell (10) und das Rahmengestell (11) einen quaderförmigen Beladeraum (12) umgrenzen, der eine Beladeseite (13), eine Rückseite (14) sowie zwei seitliche Begrenzungen (15) aufweist.

13. Vorrichtung nach Anspruch 12,
**dadurch gekennzeichnet, dass**
die Speichereinrichtung (5) in sich von der Beladeseite (13) des Beladeraums (12) zu der Rückseite (14) erstreckende, parallel zueinander angeordnete, beladeseitig und zweckmäßigerweise auch rückseitig offene Fächer (16) unterteilt ist.

14. Vorrichtung nach Anspruch 13,
**dadurch gekennzeichnet, dass**
die Unterteilung mit an sich bekannten Fachbegrenzungselementen, insbesondere mit hintereinander gereihten, vorzugsweise mit Röllchen bestückten, in Vertikalebenen angeordneten Stahldrähten (17) ausgebildet ist.

15. Vorrichtung nach Anspruch 13 und/oder 14
**dadurch gekennzeichnet, dass**
am Boden der Fächer (16) eine Rollenbahn (16a) mit Rollen (16b) vorgesehen ist.

16. Vorrichtung nach Anspruch 13 und/oder 14
**dadurch gekennzeichnet, dass**
am Boden der Fächer (16) ein Transportband angeordnet ist.

17. Vorrichtung nach einem oder mehreren der Ansprüche 13 bis 16,
**dadurch gekennzeichnet, dass**
die Fächer (16) Fächer von Fächerwagen (20) sind, die seitlich nebeneinander gestellt in dem Beladeraum (12) positioniert sind.

18. Vorrichtung nach einem oder mehreren der Ansprüche 1 bis 17,
**dadurch gekennzeichnet, dass**
beladeseitig frontal die Sortiervorrichtung (7) seitlich verfahrbar mit der Speichereinrichtung (5) in Verbindung steht.

19. Vorrichtung nach Anspruch 18,
**dadurch gekennzeichnet, dass**
die Sortiervorrichtung (7) oberseitig an einem Tragbalken (22) der Speichereinrichtung (5) lagert und sich in ihrem unteren Bereich vorzugsweise über mindestens eine Führungsrolle (25) an einem Führungsbalken (23) der Speichereinrichtung (5) abstützt.

20. Vorrichtung nach einem oder mehreren der Ansprüche 1 bis 19,
**dadurch gekennzeichnet, dass**
die Sortiervorrichtung (7) ein vertikal oder etwas geneigt ausgerichtetes wand- oder plattenförmiges, senkrecht zur Beladefront ausgerichtetes Anlageelement (24) mit einer ebenen Beladeseite (26) aufweist.

21. Vorrichtung nach Anspruch 20,
**dadurch gekennzeichnet, dass**
das Anlageelement (24) eine Oberkante (27), eine von der Speichereinrichtung (5) abgewandte freie Seitenkante (28) und eine Unterkante (29) aufweist.

22. Vorrichtung nach Anspruch 21,
**dadurch gekennzeichnet, dass**
im Bereich der Oberkante (27) speichereinrichtungsseitig ein Kragelement, vorzugsweise eine Kragplatte (30) angeordnet ist, die ein Stück über die Speichereinrichtung (5), vorzugsweise über den Tragbalken (22) ragt und den Motor (31) trägt, der über Antriebsmittel (32) mit der Linearführung (33) in Verbindung steht.

23. Vorrichtung nach Anspruch 21 und/oder 22,
**dadurch gekennzeichnet, dass**
das Anlageelement (24) im Bereich oberhalb der Unterkante (29) mit einer der Ebene der Beladeseite (26) des Anlageelements (24) vorgeordneten horizontalen Transportbahn, vorzugsweise einer horizontalen Rollenbahn (34) mit vorzugsweise angetriebenen Transportrollen (1) bestückt ist, deren Achsen senkrecht zur Ebene der Beladeseite (26) des Anlageelements (24) angeordnet sind, wobei die Rollenbahn (34) höhenmäßig mit den Transportbahnen (16a) der Speichereinrichtung (5) fluchtet.

24. Vorrichtung nach Anspruch 23,
**dadurch gekennzeichnet, dass**
oberhalb der Rollenbahn (34) parallel dazu ausgerichtet eine Einschiebeeinrichtung (35) in den Oberflächenbereich der Beladeseite (26) des Anlagenelements (24) eingebracht ist, die ein mit einer steuerbaren Antriebseinrichtung gekoppeltes Schiebeelement, vorzugsweise einen Schiebefinger (4) aufweist, der aus der Ebene der Beladeseite (26) des Anlagenelements (24) heraus- und wieder zurück verfahrbar angeordnet ist und in Richtung Speichereinrichtung (5) und wieder zurück verfahrbar ist.

25. Vorrichtung nach einem/oder mehreren der Ansprüche 20 bis 24,
**dadurch gekennzeichnet, dass**
frontal vor der Speichereinrichtung (5) an der Sortiervorrichtung (7) eine vertikal ausgerichtete Führungseinrichtung (37a) für ein plattenförmiges Element angeordnet ist.

26. Vorrichtung nach Anspruch 25,
**dadurch gekennzeichnet, dass**
die Führungseinrichtung (37a) zwei seitlich nebeneinander auf Plattenmaterialabstand in Vertikalebenen angeordnete, drehbar gelagerte, vorzugsweise angetriebene Führungssäulen (38a) mit Führungsrollen (38) aufweist.

27. Vorrichtung nach einem oder mehreren der Ansprüche 20 bis 26
**dadurch gekennzeichnet, dass**
im Anlageelement (24) Abstützelemente für das plattenförmige Material zweckmäßigerweise in Form von in horizontalen Reihen (39) aus der Ebene der Beladeseite (26) des Anlagenelements (24) vorstehenden, um vertikale Achsen drehbaren Röllchen (40) angeordnet sind.

28. Vorrichtung nach einem oder mehreren der Ansprüche 20 bis 27,
**dadurch gekennzeichnet, dass**
das Anlageelement (24) als Luftkissenwand zur Erzeugung eines Luftkissens für das Plattenmaterial und zur Erzeugung eines Unterdrucks mit einer entsprechenden Druckluft- bzw. Vakuumeinrichtung in Verbindung steht.

29. Vorrichtung nach einem oder mehreren der Ansprüche 20 bis 28
**dadurch gekennzeichnet, dass**
das Anlageelement (24) beidseits eine Transportbahn (34) aufweist.

30. Vorrichtung nach Anspruch 29,
**dadurch gekennzeichnet, dass**
das Anlageelement (24) beidseits eine Einschiebeeinrichtung (35) aufweist.

31. Vorrichtung nach Anspruch 29 und/oder 30,
**dadurch gekennzeichnet, dass**
das Anlageelement (24) beidseits eine vertikale Führungseinrichtung (37a) und/oder Abstützelemente für das plattenförmige Material aufweist.

## Claims

1. Apparatus having a control unit and a loading mechanism, which is connected to the latter and is designed for manual feeding with upright, sheet-like material, in particular with glass panes (6), wherein the loading mechanism has a storage device (5) for storing the upright, sheet-like material and a sorting mechanism (7) for loading the upright, sheet-like material into the storage device (5) in a sorted manner, wherein the sorting mechanism (7) is movable laterally in a program-controlled manner on a loading side of the storage device (5) along the loading side, and wherein the sorting mechanism (7) is connected on the loading side and in a laterally movable manner to the storage device (5) and is mounted on the storage device (5).

2. Apparatus according to Claim 1, **characterized in that** the sorting mechanism (7) is connected to a linear guide (33) fixed on the storage device.

3. Apparatus according to Claim 2, **characterized in that** a program-controlled motor (31) is arranged on the sorting mechanism (7) and is connected to the linear guide (33) via driving means (32).

4. Apparatus according to Claim 3, **characterized in that** the motor (31) is connected in terms of circuitry to a programmed control device.

5. Apparatus according to Claim 4, **characterized in that** corresponding position recognition elements are arranged on the storage device (5) and the sorting mechanism (7) and are connected, for example electrically or by radio, to the control device.

6. Apparatus according to Claim 4 and/or, **characterized in that** the sorting mechanism (7) has a data input device which is connected to the control device.

7. Apparatus according to one or more of Claims 1 to 6, **characterized in that** the sorting mechanism (7) is arranged on the storage device (5) in a rail-guided and rail-mounted manner.

8. Apparatus according to Claim 7, **characterized in that** the linear guide (33) is integrated in the rail guide.

9. Apparatus according to one or more of Claims 2 to 8, **characterized in that** the sorting mechanism (7) is supported on the linear guide (33) and, in a region spaced apart in terms of height therefrom, on the storage device (5).

10. Apparatus according to one or more of Claims 1 to 9, **characterized in that** the sorting mechanism (7) is guided on the storage device (5) via supporting rollers (25).

11. Apparatus according to one or more of Claims 1 to 10, **characterized in that** the storage device (5) is jacked up at a distance from the floor (8), for example on feet (9).

12. Apparatus according to one or more of Claims 1 to 11, **characterized in that** the storage device (5) has a horizontally arranged, rectangular supporting framework (10) and a rack (11) which is constructed on the supporting framework (10), wherein the supporting framework (10) and the rack (11) bound a cuboidal loading space (12) which has a loading side (13), a rear side (14) and two lateral boundaries (15).

13. Apparatus according to Claim 12, **characterized in that** the storage device (5) is divided into compartments (16) which extend from the loading side (13) of the loading space (12) to the rear side (14), are arranged parallel to one another and are open on the loading side and expediently also on the rear side.

14. Apparatus according to Claim 13, **characterized in that** the division is formed by compartment boundary elements which are known per se, in particular by steel wires (17) which are arranged consecutively in a row, are preferably equipped with castors and are arranged in vertical planes.

15. Apparatus according to Claim 13 and/or 14, **characterized in that** a roller track (16a) with rollers (16b) is provided at the bottom of the compartments (16).

16. Apparatus according to Claim 13 and/or 14, **characterized in that** a conveying belt is arranged at the bottom of the compartments (16).

17. Apparatus according to one or more of Claims 13 to 16, **characterized in that** the compartments (16) are compartments of compartmentalized carriages (20) which are positioned laterally next to one another in the loading space (12).

18. Apparatus according to one or more of Claims 1 to 17, **characterized in that** the sorting mechanism (7) is connected frontally on the loading side to the storage device (5) in a laterally movable manner.

19. Apparatus according to Claim 18, **characterized in that** the sorting mechanism (7) is mounted on the upper side on a supporting beam (22) of the storage device (5) and is supported in its lower region on a guide beam (23) of the storage device (5), preferably via at least one guide roller (25).

20. Apparatus according to one or more of Claims 1 to 19, **characterized in that** the sorting mechanism (7) has a wall- or sheet-like bearing element (24) which is oriented vertically or in a somewhat inclined manner, is oriented perpendicularly with respect to the loading front and has a level loading side (26).

21. Apparatus according to Claim 20, **characterized in that** the bearing element (24) has an upper edge (27), a free side edge (28) facing away from the storage device (5), and a lower edge (29).

22. Apparatus according to Claim 21, **characterized in that** a protruding element, preferably a protruding plate (30), is arranged in the region of the upper edge (27) on the storage device side, the protruding plate protruding a distance above the storage device (5), preferably above the supporting beam (22), and carrying the motor (31), which is connected to the linear guide (33) via a driving means (32).

23. Apparatus according to Claim 21 and/or 22, **characterized in that**, in the region above the lower edge (29), the bearing element (24) is equipped with a horizontal transporting track arranged upstream of the plane of the loading side (26) of the bearing element (24), preferably a horizontal roller track (34) with preferably driven transporting rollers (1), the axes of which are arranged perpendicular with respect to the plane of the loading side (26) of the bearing element (24), with the roller track (34) being aligned in terms of height with the transporting tracks (16a) of the storage device (5).

24. Apparatus according to Claim 23, **characterized in that**, above the roller track (34) in a manner oriented parallel thereto, a push-in device (35) is placed into the surface region of the loading side (26) of the bearing element (24), which push-in device has a pushing element, preferably a pushing finger (4), which is coupled to a controllable driving device, is arranged such that it can move out of the plane of the loading side (26) of the bearing element (24) and back again and can be moved in the direction of the storage device (5) and back again.

25. Apparatus according to one or more of Claims 20 to 24, **characterized in that** a vertically aligned guide device (37a) for a sheet-like element is arranged on the sorting mechanism (7) frontally in front of the storage device (5).

26. Apparatus according to Claim 25, **characterized in that** the guide device (37a) has two rotatably mounted, preferably driven guide columns (38a), which are arranged laterally next to one another in vertical planes at the distance of the sheet material and have guide rollers (38).

27. Apparatus according to one or more of Claims 20 to 26, **characterized in that** supporting elements for the sheet-like material are arranged in the bearing element (24) expediently in the form of castors (40) which protrude in horizontal rows (39) out of the plane of the loading side (26) of the bearing element (24) and are rotatable about vertical axes.

28. Apparatus according to one or more of Claims 20 to 27, **characterized in that** the bearing element (24), as an air cushion wall, is connected to a corresponding compressed-air or vacuum device in order to produce an air cushion for the sheet material and to produce a negative pressure.

29. Apparatus according to one or more of Claims 20 to 28, **characterized in that** the bearing element (24) has a transporting track (34) on both sides.

30. Apparatus according to Claim 29, **characterized in that** the bearing element (24) has a push-in device (35) on both sides.

31. Apparatus according to Claim 29 and/or 30, **characterized in that** the bearing element (24) has a vertical guide device (37a) and/or supporting elements for the sheet-like material on both sides.

## Revendications

1. Dispositif équipé d'une unité de commande et d'un dispositif de chargement relié à celui-ci, configuré pour le chargement manuel avec de la matière sous forme de plaques disposées debout, notamment avec des plaques de verre (6), le dispositif de chargement étant muni d'une installation de stockage (5) pour le stockage de la matière sous forme de plaques disposées debout et d'un dispositif de sélection (7) pour le chargement, avec sélection, de l'installation de stockage (5) avec la matière sous forme de plaques disposées debout, le dispositif de sélection (7) étant mobile, sous le contrôle d'un programme, dans la direction latérale sur un côté de chargement de l'installation de stockage (5), le long du côté de chargement, et le dispositif de sélection (7) étant relié de manière mobile du côté de chargement avec l'installation de stockage (5) et étant monté sur l'installation de stockage (5).

2. Dispositif selon la revendication 1, **caractérisé en ce que** le dispositif de sélection (7) est relié à un guidage linéaire (33) monté fixe sur l'installation de stockage.

3. Dispositif selon la revendication 2, **caractérisé en ce qu'**un moteur (31) commandé par un programme est disposé sur le dispositif de sélection (7) et est relié au guidage linéaire (33) par le biais de moyens d'entraînement (32).

4. Dispositif selon la revendication 3, **caractérisé en ce que** le moteur (31) est relié par un branchement à un dispositif de commande programmé.

5. Dispositif selon la revendication 4, **caractérisé en ce que** des éléments de détection de position correspondants, qui sont reliés par exemple par voie électrique ou par voie radio avec le dispositif de commande, sont disposés sur l'installation de stockage (5) et sur le dispositif de sélection (7).

6. Dispositif selon la revendication 4 et/ou 5, **caractérisé en ce que** le dispositif de sélection (7) est muni d'un appareil de saisie de données relié avec le dispositif de commande.

7. Dispositif selon une ou plusieurs des revendications 1 à 6, **caractérisé en ce que** le dispositif de sélection (7) est disposé, guidé par des rails et se déplaçant sur ceux-ci, sur l'installation de stockage (5).

8. Dispositif selon la revendication 7, **caractérisé en ce que** le guidage linéaire (33) est intégré dans le guidage par rails.

9. Dispositif selon une ou plusieurs des revendications 2 à 8, **caractérisé en ce que** le dispositif de sélection (7) est en appui sur le guidage linéaire (33) et, dans une zone éloignée en hauteur de celui-ci, sur l'installation de stockage (5).

10. Dispositif selon une ou plusieurs des revendications 1 à 9, **caractérisé en ce que** le dispositif de sélection (7) est guidé sur l'installation de stockage (5) au moyen de galets d'appui (25).

11. Dispositif selon une ou plusieurs des revendications 1 à 10, **caractérisé en ce que** l'installation de stockage (5) est surélevée à distance du sol (8), par exemple au moyen de pieds (9).

12. Dispositif selon une ou plusieurs des revendications 1 à 11, **caractérisé en ce que** l'installation de stockage (5) possède un cadre porteur (10) rectangulaire disposé horizontalement et un châssis (11) monté sur le cadre porteur (10), le cadre porteur (10) et le châssis (11) délimitant un espace de chargement (12) parallélépipédique comprenant un côté de chargement (13), un côté arrière (14), ainsi que deux délimitations latérales (15).

13. Dispositif selon la revendication 12, **caractérisé en ce que** l'installation de stockage (5) est subdivisée en compartiments (16) parallèles entre eux, s'étendant depuis le côté de chargement (13) de l'espace de chargement (12) jusqu'au côté arrière (14), ouverts sur le côté de chargement et, de manière appropriée, aussi sur le côté arrière.

14. Dispositif selon la revendication 13, **caractérisé en ce que** la subdivision est réalisée au moyen d'éléments de délimitation des compartiments connus en soi, notamment au moyen de fils d'acier (17) alignés les uns derrière les autres, portant de préférence des roulettes et disposés dans des plans verticaux.

15. Dispositif selon la revendication 13 et/ou 14, **caractérisé en ce qu'**un transporteur à rouleaux (16a) muni de rouleaux (16b) est prévu au fond des compartiments (16).

16. Dispositif selon la revendication 13 et/ou 14, **caractérisé en ce qu'**une bande transporteuse est disposée au fond des compartiments (16).

17. Dispositif selon une ou plusieurs des revendications 13 à 16, **caractérisé en ce que** les compartiments (16) sont des compartiments de chariots à compartiments (20), qui sont positionnés latéralement côte à côte dans l'espace de chargement (12).

18. Dispositif selon une ou plusieurs des revendications 1 à 17, **caractérisé en ce que** le dispositif de sélection (7) est relié, de manière mobile dans la direction latéral, avec l'installation de stockage (5), frontalement sur le côté de chargement.

19. Dispositif selon la revendication 18, **caractérisé en ce que** le dispositif de sélection (7) est en appui, du côté supérieur, sur une poutre (22) de l'installation de stockage (5) et s'appuie de préférence, dans sa zone inférieure, sur une poutre de guidage (23) de l'installation de stockage (5) au moyen d'au moins un galet de guidage (25).

20. Dispositif selon une ou plusieurs des revendications 1 à 19, **caractérisé en ce que** le dispositif de sélection (7) possède un élément d'appui (24) en forme de mur ou de plaque orienté verticalement ou légèrement incliné, orienté perpendiculairement au côté frontal de chargement, avec une face de chargement (26) plane.

21. Dispositif selon la revendication 20, **caractérisé en ce que** l'élément d'appui (24) possède un bord supérieur (27), un bord latéral (28) libre opposé à l'installation de stockage (5) et un bord inférieur (29).

22. Dispositif selon la revendication 21, **caractérisé en ce que**, dans la zone du bord supérieur (27), du côté de l'installation de stockage, un élément en porte à faux, de préférence une plaque en porte à faux (30), est disposé, surplombant une partie de l'installation de stockage (5), de préférence la poutre (22) et portant le moteur (31), qui est relié avec le guidage linéaire (33) par le biais de moyens d'entraînement (32).

23. Dispositif selon la revendication 21 et/ou 22, **caractérisé en ce que** l'élément d'appui (24), dans la zone au-dessus du bord inférieur (29), est équipé d'un convoyeur horizontal, de préférence d'un transporteur à rouleaux horizontal (34), disposé devant le plan de la face de chargement (26) de l'élément d'appui (24), muni de préférence de rouleaux de transport (1) entraînés, dont les axes sont disposés perpendiculairement au plan de la face de chargement (26) de l'élément d'appui (24), le transporteur à rouleaux (34) étant aligné en hauteur avec les transporteurs à rouleaux (16a) de l'installation de stockage (5).

24. Dispositif selon la revendication 23, **caractérisé en ce que**, au-dessus du transporteur à rouleaux (34) et alignée parallèlement à celui-ci, une installation d'introduction (35) est insérée dans la zone de la surface de la face de chargement (26) de l'élément d'appui (24), munie d'un élément de poussée, de préférence un doigt de poussée (4), couplé à une installation d'entraînement commandable, qui est disposé de manière à sortir du plan de la face de chargement (26) de l'élément d'appui (24) et à se rétracter dans celui-ci et à pouvoir être déplacé en direction de l'installation de stockage (5) et dans la direction inverse.

25. Dispositif selon une ou plusieurs des revendications 20 à 24, **caractérisé en ce qu'**un dispositif de guidage (37a), orienté verticalement, pour un élément en forme de plaque, est disposé sur le dispositif de sélection (7), frontalement devant l'installation de stockage (5).

26. Dispositif selon la revendication 25, **caractérisé en ce que** le dispositif de guidage (37a) possède deux colonnes de guidage (38a) tournantes, de préférence entraînées, munies de galets de guidage (38), disposées latéralement côte à côte dans des plans verticaux à une distance correspondant à la matière des plaques.

27. Dispositif selon une ou plusieurs des revendications 20 à 26, **caractérisé en ce que** des éléments supports pour les plaques de matière sont disposés de manière appropriée dans l'élément d'appui (24) sous la forme de rangées horizontales (39) de roulettes (40) tournant sur des axes verticaux et dépassant du plan de la face de chargement (26) de l'élément d'appui (24).

28. Dispositif selon une ou plusieurs des revendications 20 à 27, **caractérisé en ce que** l'élément d'appui (24), en tant que paroi à coussin d'air, est relié à une installation d'air comprimé ou à une installation de vide, respectivement pour la création d'un coussin d'air pour la plaque de matière et pour la création d'une sous-pression.

29. Dispositif selon une ou plusieurs des revendications 20 à 28, **caractérisé en ce que** l'élément d'appui (24) est muni d'un transporteur à rouleaux (34) des deux côtés.

30. Dispositif selon la revendication 29, **caractérisé en ce que** l'élément d'appui (24) est muni d'une installation d'introduction (35) des deux côtés.

31. Dispositif selon la revendication 29 et/ou 30, **caractérisé en ce que** l'élément d'appui (24) est muni des deux côtés d'un dispositif de guidage (37a) et/ou d'éléments supports pour les plaques de matière.
